## Europäisches Patentamt

## European Patent Office

## Office européen des brevets

(11) Publication number: **0 136 797**
**B1**

(12) **EUROPEAN PATENT SPECIFICATION**

(45) Date of publication of patent specification: **02.11.89**

(21) Application number: **84305600.3**

(22) Date of filing: **17.08.84**

(51) Int. Cl.⁴: **G 01 N 29/04**

(54) **Contact ultrasonic probe holders.**

(30) Priority: **24.08.83 GB 8322791**

(43) Date of publication of application:
**10.04.85 Bulletin 85/15**

(45) Publication of the grant of the patent:
**02.11.89 Bulletin 89/44**

(84) Designated Contracting States:
**DE FR NL**

(56) References cited:
**DE-A-2 935 497**
**FR-A-2 385 098**
**US-A-4 368 644**

**PATENTS ABSTRACTS OF JAPAN, vol. 6, no. 252 (P-161) 1130r, 10th December 1982; & JP - A - 57 148 248 (HITACHI SEISAKUSHO K.K.) 13-09-1982, & US - A - 4 474 064 (A. NARUSE)**

(73) Proprietor: **UNITED KINGDOM ATOMIC ENERGY AUTHORITY**
**11 Charles II Street**
**London SW1Y 4QP (GB)**

(72) Inventor: **McKirdy, Bruce John**
**57 Blenheim Drive**
**Summertown Oxford (GB)**
Inventor: **Cooper, Ashley George**
**56 Common Lane Culcheth**
**Warrington Cheshire (GB)**

(74) Representative: **Alderman, John Edward**
**United Kingdom Atomic Energy Authority**
**Patents Branch B329 Harwell Laboratory**
**Oxfordshire, OX11 0RA (GB)**

Courier Press, Leamington Spa, England.

## Description

This invention relates to probe holders and it is primarily concerned with ultra-sonic probe holders for the inspection of a massive weld that arises when a circular pipe is joined by welding with a circular vessel, the axes of pipe and vessel being at right angles. Such welds appear in the nuclear art.

It is one object, when inspecting such welds, to direct an ultra-sonic beam from a probe in a direction so that the line of the beam (when projected) intersects the axis of the pipe. If a probe is mounted on a gimbal holder, so that the surface of the probe remains in contact with the surface of the vessel, and the holder is mounted at the end of an arm which rotates about a point on the axis of the pipe which lies inside the vessel then at four angles of rotation only of the arm (namely 0°, 90°, 180° and 270°) does the projected beam intersect the axis of the pipe. At other angles the required intersection is not attained.

In US-A-4368644 there is described a tool for moving an ultrasonic probe over a weld at a junction between two cylinders in which the probe is carried in a gimbal and movement of the probe is effected by a cam shaped to maintain the beam from the probe parallel to the axis of one of the cylinders. The movement of the probe in the gimbal is determined by the cam, which produces only one form of probe movement, which is related to the shape of the weld.

According to one aspect of the invention there is provided a probe holder in which a probe is mounted on a gimbal characterised in that, in order that the probe can maintain contact with a curved surface whilst being moved over the surface at the end of an arm, the gimbal is provided with means for effecting a mechanical linkage to impose a rotation on the probe by virtue of, and whilst maintaining, surface contact, which rotation is about an axis normal to the surface and sustains the sighting of the probe in a desired direction, which head has a pair of inclined slots into which respective stub axles are inserted to form the mechanical linkage, the axles being carried on a mounting, and in that the head is of spherical shape having a surface which carries the probe, and the slots being inclined to the equator of the spherical surface.

An arm may be mounted on the axis of a pipe making a normal junction with a cylinder at a weld and the arm may have an extension with gimbal pivot bearings for the gimbal; and the gimbal may comprise an outer frame pivotable on the bearings and an inner frame pivot with an inner frame mounted on that pivot; and the spherical-shaped head may be rotatable on an axle in the inner frame whilst confined by sockets in the outer frame and confined by the stub axles on the axis of the gimbal pivot bearings which penetrate into the slots.

According to another aspect of the invention apparatus for projecting a beam of ultrasonic energy into a body having a curvilinear contour comprises a probe for producing said beam; a probe holder as defined above carrying the probe and presenting the probe for contact with said body; means for mounting the probe holder and traversing the probe holder over said body with the probe in contact with said curvilinear contour; the mounting means comprising an arm; said probe holder comprising:

a. a ball element carrying the probe;

b. said gimbal comprising a U-shaped inner frame having side legs between which the ball element is located and a U-shaped outer frame having side legs between which the inner frame is located;

c. first pivot means interconnecting the ball element with the side legs of the inner frame;

d. second pivot means interconnecting the side legs of the outer frame with the mounting means, said first and second pivot means defining respective first and second axes which are mutually orthogonal with respect to one another;

e. third pivot means interconnecting the inner and outer frames whereby the inner frame is movable angularly relative to the outer frame about a third axis perpendicular to said first and second axes; and said means for effecting a mechanical linkage being operative to link said outer frame and the ball element and operable automatically, in response to angular movement of said ball element about said first and second axes as the ball element traverses over said curvilinear contour, to effect compensating angular movement of the ball element about the third axis whereby a predetermined relationship between the direction of said beam and the mounting means is maintained, and in that said means for mechanically linking the outer frame and the ball element may comprise pin and slot means.

The pin and slot means may comprise slots formed in the ball element at diametrically opposite sides thereof and pins coaxial with said second pivot means, the slots each extending above and below a plane containing said first and second axes.

The invention will now be described further with reference to the accompanying drawings in which:-

Figure 1 is a perspective view of a pipe welded to a cylinder;

Figure 2 is a horizontal section on the plane indicated by II-II of Figure 1;

Figure 3 is a perspective of a gimbal mounted probe in accordance with the invention, and Figure 4 is a vertical sectional view in the direction indicated by line IV-IV of Figure 3.

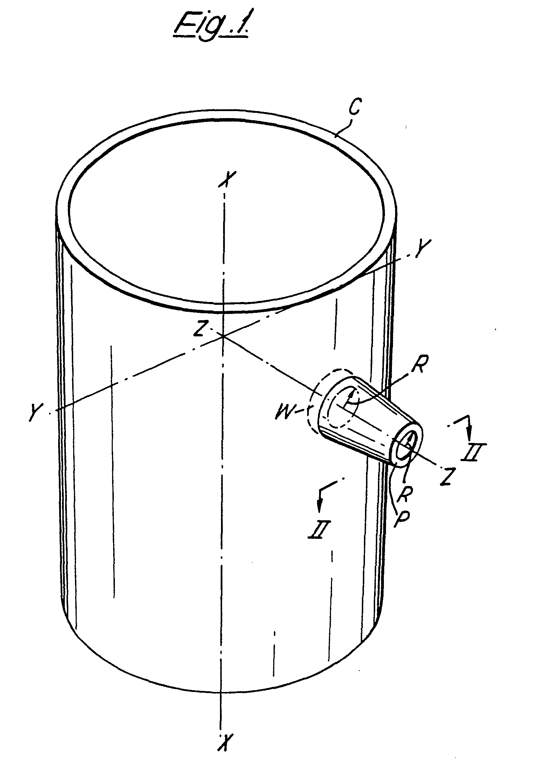

In Figure 1 a pipe p is shown welded to a cylinder C (the diameter ratios are typically 1:5), at a weld W. The three coordinate axes X, Y and Z are shown together with a pipe internal radius R.

Figure 2 shows the nature of the weld to be inspected. The cylinder C and pipe P have engaging edges E and the weld W extends as an inward part and outward part from the edges E. The weld can be regarded as having a centre line CL which lies on a cylindrical surface coaxial with axis Z. The edge E lies at the rim of a cylinder and hence the inward and outward parts of the weld vary in depth as exemplified by the dash line weld W shown on the axis Z.

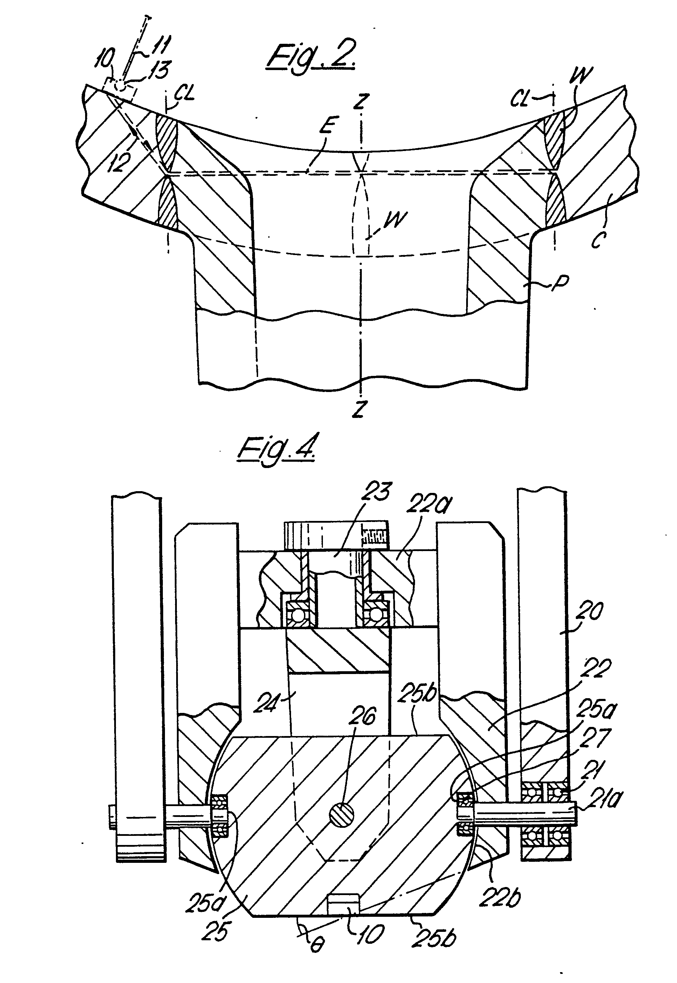

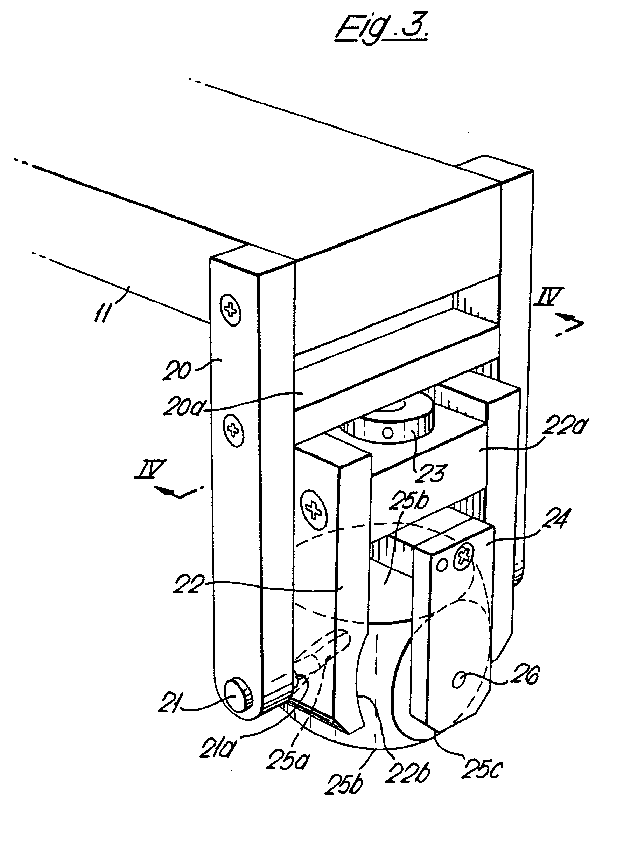

An ultrasonic probe 10 for inspecting the weld is shown mounted at the end of an arm 11 so that the probe is in contact with the internal surface of the cylinder C. The arm is pivoted at the point of intersection of the Z and X axes and has freedom to move the probe 10 around the inside surface of the cylinder so that transmissions 12 can be used to inspect the weld. The probe 10 is mounted on the arm 11 at a gimbal 13 (described in detail with Figures 3 and 4) so that as arm 11 is rotated the probe follows the surface of the cylinder so that the beam is directed into the weld W. (It is convenient to mention at this point that if gimbal 13 were of conventional construction then at all positions other than 0°, 90°, 180° and 270° of rotation of arm 11 the beam of the probe would not, when projected intersect the axis Z of the pipe P). The present arrangement avoids this.

In Figure 3 the arm 11 is shown with a downward extension 20 having a cross strengthener 20a and bearings 21 at the lower end of extension 20. The bearings each support a stub axle 21a. The gimbal 13 comprises an outer frame 22 with a cross strut 22a, a pivot 23 in cross-strut 22a, an inner frame 24 mounted on pivot 23 and carrying a "ball" 25 mounted on a pivot 26 in the inner frame 24.

The ball 25 has upper and lower flat surfaces 25b and front and rear flat surfaces 25c. The ball also has a pair of inclined slots 25a into which the stub axles 21a enter. The axles 21a terminate at bearings 27 in the slots 25a, they are fixed to the frame 22 where they penetrate it and they rotate in bearings 21 in arm extensions 20. The ultrasonic probe 10 is mounted in the lower flat surface 25b. The curved surface of the ball (which have the slots 25a) engage in spherical sockets 22b in the frame 22. The slots 25a lie in a plane which is inclined to the flat surfaces 25b and inclined to the axis of pivot 26.

In use, the lower flat surface 25b of the ball follows the surface of the cylinder C as the arm 11 is caused to rotate and in doing so adopts a rotation about an axis normal to the flat surface 25b and about the axis of the pivot 26 as determined by the stub axles in the slots 25a. This causes the beam from the probe 10 (when projected) to always intersect the axis Z of the pipe P.

As the ball moves over the surface of the cylinder C the aspect of the undersurface 25b alters as shown by the angle φ and the slots 25a impose a rotation on the ball and keep the beam from the probe in the desired direction.

Other, but similar, probe mountings can be provided to ensure that an ultrasonic inspection beam "looks" in other predetermined directions and not necessarily towards the axis of pipe P. For example, the beam could look in a direction which is tangential to the cylindrical surface coaxial with axis Z.

The weld could also be inspected by arranging for the probe 10 to be moved over the external surface of the cylinder C.

**Claims**

1. A probe holder in which a probe is mounted in a head which is mounted on a gimbal characterised in that, in order that the probe (10) can maintain contact with a curved surface whilst being moved over the surface at the end of an arm (11), the gimbal (13) is provided with means (21a, 25a) for effecting a mechanical linkage to impose a rotation on the probe (10) by virtue of, and whilst maintaining, surface contact, which rotation is about an axis normal to the surface and sustains the sighting of the probe in a desired direction, which head (25) has a pair of inclined slots (25a) into which respective stub axles (21a) are inserted to form the mechanical linkage, the axles (21a) being carried on a mounting (20), and in that the head (25) is of spherical shape having a surface (25b) which carries the probe (10), the slots (25a) being inclined to the equator of the spherical surface.

2. A probe holder as claimed in claim 1, characterised in that the arm (11) is mounted on the axis (2) of a pipe (P) making a normal junction with a cylinder (C) at a weld (W) and the arm has an extension with gimbal pivot bearings (21) for the gimbal (13); and the gimbal comprises an outer frame (22) pivotable on the bearings and an inner frame pivot (23) with an inner frame (24) mounted on that pivot; and the spherical-shaped head (25) is rotatable on an axle (26) in the inner frame (24) whilst confined by sockets (22b) in the outer frame and confined by the stub axles (21a) on the axis of the gimbal pivot bearings which penetrate into the slots (25a).

3. Apparatus for projecting a beam of ultrasonic energy into a body having a curvilinear contour, the apparatus comprising a probe for producing said beam; a probe holder as claimed in Claim 1 carrying the probe and presenting the probe for contact with said body; means (20) for mounting the probe holder and traversing the probe holder over said body with the probe in contact with said curvilinear contour; the mounting means comprising an arm; which probe holder comprises:

a. the head which has the shape of a ball element (25) carrying the probe (10);

b. said gimbal comprising a U-shaped inner frame (24) having side legs between which the ball element is located and a U-shaped outer frame (22) having side legs between which the inner frame is located;

c. first pivot means (26) interconnecting the ball element with the side legs of the inner frame;

d. second pivot means comprising the stub axles (21a) which interconnect the side legs of the outer frame with the mounting means (20), said first and second pivot means defining respective first and second axes which are mutually orthogonal with respect to one another;

e. third pivot means (23) interconnecting the inner and outer frames whereby the inner frame is movable angularly relative to the outer frame (22) about a third axis perpendicular to said first and second axes; said means (21a, 25a) for effecting a mechanical linkage being operative to link said outer frame and the ball element and operable automatically, in response to angular movement of said ball element about said first and second axes as the ball element traverses over said curvilinear contour, to effect compensating angular movement of the ball element about the third axis whereby a predetermined relationship between the direction of said beam and the mounting means is maintained, and in that said means for mechanically linking the outer frame and the ball element comprise said stub axles (21a) and said slot means (25a).

4. Apparatus as claimed in Claim 3, characterised in that said pin and slot means comprise slots (25a) formed in the ball element at diametrically opposite sides thereof and said stub axles (21a) coaxial with said second pivot means, the slots each extending above and below a plane containing said first and second axes.

**Patentansprüche**

1. Halter für Sonden, in dem eine Sonde in einem Kopf angebracht ist, der an einer Kardanaufhängung angebracht ist, dadurch gekennzeichnet, daß, damit die Sonde (10) die Berührung mit einer gekrümmten Oberfläche beibehalten kann, während sie am Ende eines Armes (11) Über die Oberfläche bewegt wird, die Kardanaufhängung (13) mit einer Einrichtung (21a, 25a) versehen ist, um eine mechanische Koppelung zu bewirken, um auf die Sonde (10) kraft der Oberflächenberührung und während deren Aufrechterhaltung eine Drehung aufzubringen, welche Drehung um eine Achse erfolgt, die senkrecht zur Oberfläche verläuft und die Ausrichtung der Sonde in einer gewünschten Richtung aufrechterhält, wobei der Kopf (25) ein Paar geneigter Schlitze (25a) aufweist, in welche jeweilige Achsstummel (21a) eingefÜhrt sind, um die mechanische Koppelung zu bilden, und die Achsen (21a) auf einem Rahmen (20) getragen sind, und daß der Kopf (25) eine kugelige Form aufweist, mit einer Fläche (25b), die die Sonde (10) trägt, wobei die Schlitze (25a) zum Äquator der kugeligen Fläche geneigt sind.

2. Sondenhalter nach Anspruch 1, dadurch gekennzeichnet, daß der Arm (11) an der Achse (2) eines Rohres (P) angebracht ist, das eine senkrechte Verbindung mit einem Zylinder (C) an einer Schweißstelle (W) bildet, der Arm eine Verlängerung mit Kardan-Schwenklagern (21) für die Kardanaufhängung (13) aufweist und die Kardanaufhängung einen äußeren Rahmen (22) aufweist, der an den Lagern schwenkbar ist, sowie einen inneren Rahmen-Schwenkzapfen (23) mit einem Innenrahmen (24), der an dem Schwenkzapfen angebracht ist, und daß der kugelig geformte Kopf (25) an einer Achse (26) im inneren Rahmen (24) drehbar ist, während er durch Fassungen (22b) im äußeren Rahmen gehemmt ist und gehemmt ist durch die Achsstummel (21a) auf der Achse der Kardan-Schwenklagerungen, welche in die Schlitze (25a) eindringen.

3. Einrichtung zum Projizieren eines Ultraschallenergie-Strahles in einen Körper mit gekrümmter Kontur, mit einer Sonde zum Erzeugen des Strahles, einem Sondenhalter wie in Anspruch 1 beansprucht, der die Sonde trägt und die Sonde zur Berührung mit dem Körper darbietet, und einer Einrichtung (20) zur Anbringung des Sondenhalters und zur Querbewegung des Sondenhalters über den Körper mit der Sonde in Berührung mit der gekrÜmmten Kontur, wobei die Montageeinrichtung einen Arm aufweist und der Sondenhalter die folgenden Merkmale aufweist:

a) der Kopf weist die Form eines Kugelelements (25) auf, das die Sonde (10) trägt;

b) die Kardanaufhängung weist einen U-förmigen inneren Rahmen (24) auf, mit Seitenschenkeln, zwischen welchen das Kugelelement angeordnet ist, und einen U-förmigen äußeren Rahmen (22), der Seitenschenkel aufweist, zwischen denen der innere Rahmen angeordnet ist;

c) eine erste Schwenkeinrichtung (26), die das Kugelelement mit den Seitenschenkeln des inneren Rahmens verbindet;

d) eine zweite Schwenkeinrichtung, die die Achsstummel (21a) aufweist, welche die Seitenschenkel des äußeren Rahmens mit der Anbringungseinrichtung (20) verbindet, wobei die erste und zweite Schwenkeinrichtung die jeweilige erste bzw. zweite Achse bilden, die gegenseitig aufeinander senkrecht stehen;

e) eine dritte Schwenkeinrichtung (23), die den inneren und äußeren Rahmen verbindet, wobei der innere Rahmen winklig relativ zum äußeren Rahmen (22) um eine dritte Achse senkrecht zur ersten und zweiten Achse beweglich ist, wobei die Einrichtung (21a, 25a) zum Bewirken einer mechanischen Koppelung die Koppelung des äußeren Rahmens und des Kugelelements bewirkt und automatisch betreibbar ist, und zwar in Abhängigkeit von der Winkelbewegung des Kugelelements um die erste und zweite Achse, wenn das Kugelelement über die gekrümmte Kontur hinwegläuft, um eine kompensierende Winkelbewegung des Kugelelements um die dritte Achse zu bewirken, während eine vorbestimmte Zuordnung zwischen der Richtung des Strahles und der Anbringungseinrichtung beibehalten wird, und daß die Einrichtung zur mechanischen Koppelung des äußeren Rahmens und des Kugelelements eine Einrichtung aus den genannten Achsstummeln (21a) und dem genannten Schlitz (25a) aufweist.

4. Einrichtung nach Anspruch 3, dadurch gekennzeichnet, daß die Stift- und Schlitzeinrichtung Schlitze (25a) aufweist, die im Kugelelement an dessen diametral gegenÜberliegenden Seiten ausgebildet sind, und daß die Achsstummel (21a) koaxial zur zweiten Schwenkeinrichtung liegen, wobei sich die Schlitze jeweils über und unter einer Fläche erstrecken, die die erste und zweite Achse enthält.

## Revendications

1. Support de sonde dans lequel une sonde est montée dans une tête qui est montée sur un joint de cardan, carac térisé en ce que, pour que la sonde (10) puisse rester au contact d'une surface courbe tout en se déplaçant sur la surface à l'extrémité d'un bras (11), le joint de cardan (13) comporte un dispositif (21a, 25a) destiné à créer une liaison mécanique qui impose une rotation de la sonde (10) grâce au contact superficiel et avec conservation de ce contact, cette rotation s'effectuant autour d'un axe perpendiculaire à la surface et maintenant l'orientation de l'observation de la sonde en direction voulue, la tête (25) ayant deux fentes inclinées (25a) dans lesquelles sont introduits des axes rectilignes respectifs (21a) afin que la liaison mécanique soit formé, les axes (21a) étant supportés par un organe de montage (20), et en ce que la tête (25) a une configuration sphérique ayant une surface (25b) qui supporte la sonde (10), les fentes (25a) étant inclinées vers l'équateur de la surface sphérique.

2. Support de sonde selon la revendication 1, caractérisé en ce que le bras (11) est monté sur l'axe (2) d'une tuyauterie (P) qui forme un raccord normal avec un cylindre (C) au niveau d'une soudure (W) et le bras a un prolongement ayant des paliers (21) de pivotement du joint de cardan (13), et le joint de cardan comporte un cadre externe (22) qui peut pivoter sur les paliers et un pivot (23) de cadre interne, un cadre interne (24) étant monté sur ce pivot, et la tête de forme sphérique (25) peut tourner sur un axe (26) placé dans le cadre interne (24) tout en étant retenue par des douilles (22b) placées dans le cadre externe et par les axes rectilignes (21a) montés sur l'axe des paliers de pivot de cardan qui pénètrent dans les fentes (25a).

3. Appareil de projection d'un faisceau d'énergie ultrasonore dans un corps ayant un profil curviligne, l'appareil comprenant une sonde destinée à former ledit faisceau, un support de sonde selon la revendication 1, portant la sonde et présentant celle-ci afin qu'elle soit au contact du corps, un dispositif (20) de montage du support de sonde et de déplacement du support de sonde sur le corps alors que la sonde est au contact du profil curviligne, le dispositif de montage comprenant un bras, le support de sonde comprenant:

a. la tête qui a la configuration d'un élément à rotule (25) portant la sonde (10),

b. le joint de cardan comprenant un cadre interne en U (24) ayant des branches latérales entre lesquelles est placé l'élément de rotule et un cadre externe en U (22) ayant des branches latérales entre lesquelles est placé le cadre interne,

c. un premier pivot (26) raccordant l'élément à rotule aux branches latérales du cadre interne,

d. un second pivot comprenant les axes rectilignes (21a) qui raccordent les branches latérales du cadre externe au dispositif de montage (20), le premier et le second pivot délimitant un premier et un second axe respectif qui sont perpendiculaires l'un à l'autre,

e. un troisième pivot (23) raccordant les cadres interne et externe, si bien que le cadre interne est mobile angulairement par rapport au cadre externe (22) autour d'un troisième axe perpendiculaire au premier et au second axe, le dispositif (21a, 25a) destiné à former une liaison mécanique assurant la liaison du cadre externe et de l'élément à rotule et assurant automatiquement, à la suite d'un déplacement angulaire de l'élément à rotule autour du premier et du second axe lorsque l'élément à rotule se déplace sur le profil rectiligne, la compensation du déplacement angulaire de l'élément à rotule autour du troisième axe, si bien qu'une relation prédéterminée est conservée entre la direction du faisceau et le dispositif de montage, et en ce que le dispositif de liaison mécanique du cadre externe à l'élément à rotule comporte les axes rectilignes (21a) et les fentes (25a).

4. Appareil selon la revendication 3, caractérisé en ce que le dispositif ayant des axes et des fentes comporte des fentes (25a) formées dans l'élément à rotule à des emplacements diamétralement opposés de celui-ci, et les axes rectilignes (21a) coaxiaux au second pivot, les fentes étant disposées chacune au-dessus et au-dessous d'un plan contenant les premier et second axes.

## Fig.1

*Fig. 2.*

*Fig. 4.*

_Fig.3._